# EUROPEAN PATENT APPLICATION

(11) **EP 4 488 949 A1**
(43) Date of publication of application: **08.01.2025**
(21) Application number: 24185949.5
(22) Date of filing: 02.07.2024
(51) Int. Cl.: G06T 11/00, G06N 3/08, G06T 7/00

(54) **METHOD AND SYSTEM FOR GENERATING COMPOSITE IMAGE**

(30) Priority: 06.07.2023 KR 20230087670
(71) Applicant: GenGenAI Inc., Seoul 06038 (KR)
(72) Inventor: CHO, Hojin, 06038 Seoul (KR); KIM, Sangil, 06038 Seoul (KR); SUNG, Myungchul, 06038 Seoul (KR)
(74) Representative: Studio Torta S.p.A.

(57) **Abstract**

The present disclosure relates to a method for generating a composite image, executed by one or more processors. The method for generating a composite image includes receiving a foreground image, receiving a background image, generating, using a first artificial neural network, information on a position and size within the background image, in which the information on the position and size within the background image is generated from the foreground image and the background image, and generating a composite image based on the foreground image, the background image, and the information on the position and size within the background image.

## Description

### BACKGROUND

### TECHNICAL FIELD

The present disclosure relates to a method and system for generating a composite image, more specifically, to a method and system for generating a composite image based on information on a foreground image, a background image, and the position and size within the background image.

### DESCRIPTION OF THE RELATED ART

An image synthesis technique is a technique that performs tasks such as removing a specific object from or adding a new object to an actual image, and is usefully utilized in various application fields such as computer graphics, video editing, and virtual reality.

Meanwhile, the image synthesis technique is one of the research topics gathering a lot of attention in the field of computer vision, and many attempts are being made to generate natural composite images with the development of artificial neural networks. However, in the case of conventional image synthesis technology, there is a problem that the user must directly input the position and size of an object in the image to be synthesized, and this problem acts as a factor that impedes the efficiency of the image synthesis task and user convenience.

### SUMMARY

In order to address the above-described problems, the present disclosure provides a method for, a computer program stored in a recording medium for, and a system (device) for generating a composite image.

The present disclosure may be implemented in various ways, including as a method, a system (apparatus), or a computer program stored in a readable storage medium.

According to an embodiment of the present disclosure, a method for generating a composite image may be executed by one or more processors and may include receiving a foreground image, receiving a background image, generating, using a first artificial neural network, information on a position and size within the background image, in which the information on the position and size within the background image is generated from the foreground image and the background image, and generating a composite image based on the foreground image, the background image, and the information on the position and size within the background image.

According to an embodiment of the present disclosure, the generating of the composite image may include extracting a feature vector from the foreground image, and generating, using a second artificial neural network, the composite image from the background image, the information on the position and size within the background image, and the feature.

According to an embodiment of the present disclosure, the information on the position and size within the background image, and the feature vector may be input to the second artificial neural network as conditions for generating the composite image.

According to an embodiment of the present disclosure, the second artificial neural network may be a generative model trained to generate the composite image in which an object of a same type as an object included in the foreground image is synthesized at the position and size within the background image.

According to an embodiment of the present disclosure, the object included in the foreground image and the object of the same type included in the composite image may be different from each other in at least one of appearance and pose.

According to an embodiment of the present disclosure, the composite image may be an image in which an object of a same type as an object included in the foreground image is synthesized to match at least some of brightness, saturation, hue, and luminance of the background image.

According to an embodiment of the present disclosure, the first artificial neural network may be a model trained to estimate information on a position and size of a training foreground image to be placed within a training background image based on training data including a pair of the training foreground image and the training background image, and the training foreground image and the training background image may be generated based on a same original training image.

According to an embodiment of the present disclosure, the training foreground image may be generated by extracting an area containing a specific object from the same original training image, the training background image may be generated by removing the specific object from the same original training image, and information on a position and size of the specific object within the same original training image may be used as ground truth for the pair of the training foreground image and the training background image when learning the first artificial neural network.

According to one embodiment of the present disclosure, the composite image may be generated without user input regarding a position and size of an object of a same type as an object included in the foreground image to be placed within the background image.

A non-transitory computer-readable recording medium storing instructions for causing performance of the method according to an embodiment of the present disclosure is provided.

An information processing system according to an embodiment of the present disclosure may include a communication device, a memory, and one or more processors coupled to the memory and configured to execute one or more computer-readable programs included in the memory, in which the one or more computer-readable programs store instructions that, when executed by the one or more processors, cause the information processing system to: receive a foreground image, receive a background image, generate, using a first artificial neural network, information on a position and size within the background image, in which the information on the position and size within the background image is generated from the foreground image and the background image, and generate a composite image based on the foreground image, the background image, and the information on the position and size within the background image.

According to various embodiments of the present disclosure, information on the position and size within the background image can be generated from the foreground and background images using an artificial neural network, and a composite image can be generated based on this. Accordingly, a composite image can be generated at an optimal position and size without the user directly entering or specifying the position, size, or the like within the background image through masking or the like and the efficiency of image synthesis task and the user convenience can be improved.

According to various embodiments of the present disclosure, a composite image can be generated from the feature vector extracted from the foreground image using the second artificial neural network, the background image, and the information on the position and size within the background image. Accordingly, a natural and realistic composite image can be generated by recognizing the features and patterns of the background image and foreground image that are to be synthesized.

According to various embodiments of the present disclosure, an object included in the foreground image and an object included in the composite image of the same type as the object included in the foreground image may be different from each other in at least one of their appearance and pose. Accordingly, a composite image in which the foreground image is naturally synthesized taking the context of the background image into account can be generated.

According to various embodiments of the present disclosure, a composite image can be synthesized so that an object of the same type as an object included in the foreground image is synthesized to match at least some of the brightness, saturation, hue, and luminance of the background image. Accordingly, a composite image in which the foreground image is harmoniously synthesized within the background image can be generated.

According to various embodiments of the present disclosure, the first artificial neural network may be a model trained to estimate information on the position and size of a training foreground image to be placed within a training background image based on training data including a pair of the training foreground image and the training background image, and the training foreground image and the training background image may be generated based on the same original training image. Accordingly, the first artificial neural network can be trained to estimate the optimal position and size within the background image, of the object included in the foreground image.

The effects of the present disclosure are not limited to the effects described above, and other effects not described herein can be clearly understood by those of ordinary skill in the art (referred to as "ordinary technician") from the description of the claims.

### BRIEF DESCRIPTION OF THE DRAWINGS

The above and other objects, features and advantages of the present disclosure will be described with reference to the accompanying drawings described below, where similar reference numerals indicate similar elements, but not limited thereto, in which:
FIG. 1 is a diagram illustrating an example of generating a composite image from a background image and a foreground image according to an embodiment of the present disclosure;
FIG. 2 is a schematic diagram illustrating a configuration in which an information processing system is communicably connected to a plurality of user terminals in order to generate a composite image according to an embodiment of the present disclosure;
FIG. 3 is a block diagram illustrating the internal configuration of a user terminal and an information processing system according to an embodiment of the present disclosure;
FIG. 4 is a diagram illustrating an example of a composite image generation system according to an embodiment of the present disclosure;
FIG. 5 is a diagram illustrating an example of generating a training foreground image, a training background image, and ground truth from an original training image according to an embodiment of the present disclosure;
FIG. 6 is a diagram illustrating an example of training a first artificial neural network according to an embodiment of the present disclosure;
FIG. 7 is a diagram illustrating an example of an artificial neural network model according to an embodiment of the present disclosure; and
FIG. 8 is a flowchart illustrating an example of a method for generating a composite image according to an embodiment of the present disclosure.

### DETAILED DESCRIPTION

Hereinafter, example details for the practice of the present disclosure will be described in detail with reference to the accompanying drawings. However, in the following description, detailed descriptions of well-known functions or configurations will be omitted if it may make the subject matter of the present disclosure rather unclear.

In the accompanying drawings, the same or corresponding components are assigned the same reference numerals. In addition, in the following description of various examples, duplicate descriptions of the same or corresponding components may be omitted. However, even if descriptions of components are omitted, it is not intended that such components are not included in any example.

Advantages and features of the disclosed examples and methods of accomplishing the same will be apparent by referring to examples described below in connection with the accompanying drawings. However, the present disclosure is not limited to the examples disclosed below, and may be implemented in various forms different from each other, and the examples are merely provided to make the present disclosure complete, and to fully disclose the scope of the disclosure to those skilled in the art to which the present disclosure pertains.

The terms used herein will be briefly described prior to describing the disclosed example(s) in detail. The terms used herein have been selected as general terms which are widely used at present in consideration of the functions of the present disclosure, and this may be altered according to the intent of an operator skilled in the art, related practice, or introduction of new technology. In addition, in specific cases, certain terms may be arbitrarily selected by the applicant, and the meaning of the terms will be described in detail in a corresponding description of the example(s). Therefore, the terms used in the present disclosure should be defined based on the meaning of the terms and the overall content of the present disclosure rather than a simple name of each of the terms.

As used herein, the singular forms "a," "an," and "the" are intended to include the plural forms as well, unless the context clearly indicates the singular forms. Further, the plural forms are intended to include the singular forms as well, unless the context clearly indicates the plural forms. Further, throughout the description, when a portion is stated as "comprising (including)" a component, it is intended as meaning that the portion may additionally comprise (or include or have) another component, rather than excluding the same, unless specified to the contrary.

Further, the term "module" or "part" used herein refers to a software or hardware component, and "module" or "part" performs certain roles. However, the meaning of the "module" or "part" is not limited to software or hardware. The "module" or "part" may be configured to be in an addressable storage medium or configured to play one or more processors. Accordingly, as an example, the "module" or "part" may include components such as software components, object-oriented software components, class components, and task components, and at least one of processes, functions, attributes, procedures, subroutines, program code segments, drivers, firmware, micro-codes, circuits, data, database, data structures, tables, arrays, and variables. Furthermore, functions provided in the components and the "modules" or "parts" may be combined into a smaller number of components and "modules" or "parts", or further divided into additional components and "modules" or "parts."

The "module" or "part" may be implemented as a processor and a memory. The "processor" should be interpreted broadly to encompass a general-purpose processor, a central processing unit (CPU), a microprocessor, a digital signal processor (DSP), a controller, a microcontroller, a state machine, and so forth. Under some circumstances, the "processor" may refer to an application-specific integrated circuit (ASIC), a programmable logic device (PLD), a field-programmable gate array (FPGA), and so on. The "processor" may refer to a combination for processing devices, for example, a combination of a DSP and a microprocessor, a combination of a plurality of microprocessors, a combination of one or more microprocessors in conjunction with a DSP core, or any other combination of such configurations. In addition, the "memory" should be interpreted broadly to encompass any electronic component that is capable of storing electronic information. The "memory" may refer to various types of processor-readable media such as random-access memory (RAM), read-only memory (ROM), non-volatile random-access memory (NVRAM), programmable read-only memory (PROM), erasable programmable read-only memory (EPROM), electrically erasable PROM (EEPROM), flash memory, magnetic or optical data storage, registers, and the like. The memory is said to be in electronic communication with a processor if the processor can read information from and/or write information to the memory. The memory integrated with the processor is in electronic communication with the processor.

In the present disclosure, a "system" may refer to at least one of a server apparatus and a cloud apparatus, but aspects are not limited thereto. For example, the system may include one or more server apparatus. In another example, the system may include one or more cloud apparatus. In still another example, the system may include both the server apparatus and the cloud apparatus operated in conjunction with each other.

In the present disclosure, an "artificial neural network" or an "artificial neural network model" may refer to a model including an input layer (layer), a plurality of hidden layers, and an output layer to infer an answer to a given input. Here, each layer may include a plurality of nodes. In addition, in the present disclosure, a plurality of artificial neural networks, such as a first artificial neural network and a second artificial neural network, are described as separate artificial neural networks, but are not limited thereto, and part or all of the plurality of artificial neural networks may be implemented as one artificial neural network.

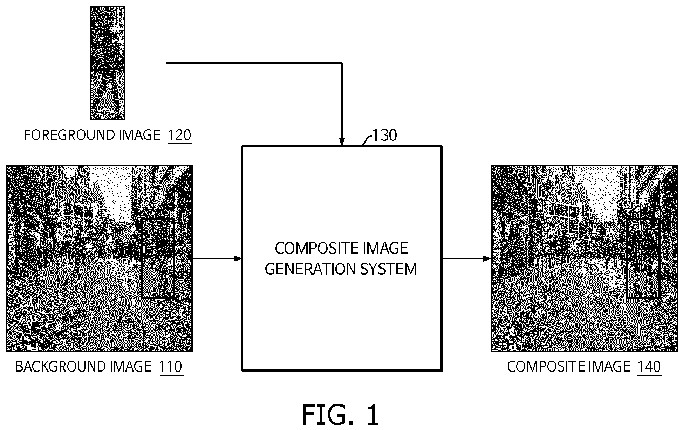

FIG. 1 is a diagram illustrating an example of generating a composite image 140 from a background image 110 and a foreground image 120 according to an embodiment of the present disclosure. As illustrated in FIG. 1, a composite image generation system 130 may be used to generate the composite image 140.

According to one embodiment, the composite image generation system 130 may receive a background image 110 and a foreground image 120 that are to be synthesized. The background image 110 is an image representing the basic environment or background in a synthesis task and may be an image including the surrounding environment, place, landscape, and the like of the composite image. The foreground image 120 is an image including a synthesis target object, and the synthesis target object may include a person, animal, or object.

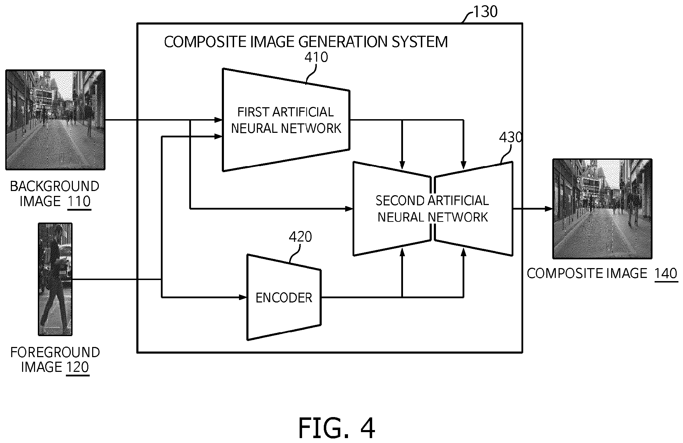

According to one embodiment, the composite image generation system 130 may generate information on the position and size within the background image 110 from the background image 110 and the foreground image 120. For this purpose, the composite image generation system 130 may use a first artificial neural network. Here, the first artificial neural network may be a model trained to estimate information on the position and size of the foreground image to be placed within the background image based on training data including a pair of a training foreground image and a training background image. Detailed thereof will be described later with reference to FIGS. 4 to 7.

According to one embodiment, the composite image generation system 130 may generate the composite image 140 based on the foreground image 120, the background image 110, and information on the position and size within the background image 110. For example, the composite image generation system 130 may extract a feature vector from the foreground image 120 and generate the composite image 140 based on the background image 110, the information on the position and size within the background image 110, and the feature vector using a second artificial neural network. In this case, the information on the position and size within the background image 110 and the feature vector may be input to the second artificial neural network as conditions for generating the composite image 140. In addition, the second artificial neural network may be a generative model (for example, diffusion model or the like) trained to generate the composite image 140 synthesized so that an object of the same type as the object included in the foreground image 120 is located at the corresponding position and size within the background image 110 by reflecting the information on the position and size within the background image 110. Details thereof will be described later with reference to FIGS. 4 to 7.

According to one embodiment, the object included in the composite image 140 is of the same type (for example, (at least one of the same Species, Genus, Family, Order, Class, Phylum, and Kingdom) as the object included in the foreground image 120, but at least one of its appearance and pose may be different. For example, as illustrated in FIG. 1, the person included in the foreground image 120 is looking to the side, but in the composite image generation process, the person included in the composite image 140 may be synthesized to face the front by taking the surrounding people in the background image 110 into consideration. Additionally, the person included in the composite image 140 may be different from the person included in the foreground image 120. Additionally, the clothing of the person included in the composite image 140 may be synthesized as if the person is wearing different clothing by considering the clothing of the surrounding people in the background image 110. Through the above-described configuration, the composite image generation system 130 can generate the composite image 140 that naturally synthesizes the foreground image 120 by considering the context of the background image 110.

According to one embodiment, the composite image 140 may be an image in which an object of the same type as an object included in the foreground image 120 is synthesized to match at least some of the brightness, saturation, hue, and luminance of the background image 110. For example, if the background image 100 is an image taken on a cloudy day, an object of the same type as the object included in the foreground image 120 may be synthesized so that the brightness, saturation, hue, and the like of the background image 110 match that of an image on a cloudy day. Through the above-described configuration, the composite image generation system 130 can generate a composite image 140 in which the foreground image 120 is harmoniously synthesized within the background image 110.

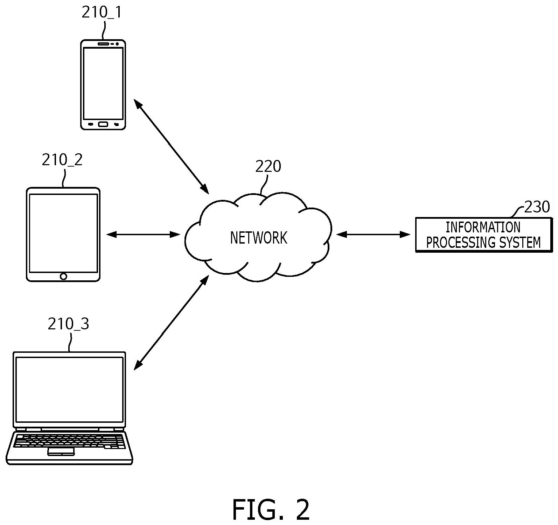

FIG. 2 is a schematic diagram illustrating a configuration in which an information processing system 230 is communicably connected to a plurality of user terminals 210_1, 210_2, and 210_3 in order to generate a composite image according to an embodiment of the present disclosure. As illustrated in the figure, the plurality of user terminals 210_1, 210_2, and 210_3 may be connected to the information processing system 230 capable of generating a composite image through a network 220. Here, the plurality of user terminals 210_1, 210_2, and 210_3 may include a user terminal that receives the generated composite image.

In one embodiment, information processing system 230 may include one or more server apparatuses and/or databases capable of storing, providing, and executing computer-executable programs (for example, downloadable applications) and data associated with generation of composite images, or may include one or more distributed computing devices and/or distributed databases based on cloud computing services.

The composite image provided by the information processing system 230 may be provided to the user through a composite image generation application web browser, a web browser extension program, or the like installed on each of the plurality of user terminals 210_1, 210_2, and 210_3. For example, the information processing system 230 may provide information or perform processing corresponding to a composite image generation request received from the user terminals 210_1, 210_2, and 210_3 through a composite image generation application or the like.

The plurality of user terminals 210_1, 210_2, and 210_3 may communicate with the information processing system 230 through the network 220. The network 220 may be configured to enable communication between the plurality of user terminals 210_1, 210_2, and 210_3 and the information processing system 230. Depending on the installation environment, the network 220 may be configured of, for example, a wired network such as Ethernet, a wired home network (Power Line Communication), a telephone line communication device, and RS-serial communication, a wireless network such as a mobile communication network, a wireless LAN (WLAN), Wi-Fi, Bluetooth, and ZigBee, or a combination thereof. The communication method is not limited, and may include communication methods utilizing communication networks that the network 220 may include (for example, mobile communication networks, wired Internet, wireless Internet, broadcasting networks, satellite networks, and the like) as well as short-range wireless communication between the user terminals (210_1, 210_2, and 210_3).

In FIG. 2, a mobile phone terminal (210_1), a tablet terminal (210_2), and a PC terminal (210_3) are illustrated as examples of the user terminals, but the present disclosure is not limited thereto, and the user terminals (210_1, 210_2, and 210_3) may be any computing device on which a composite image generation service application, a web browser, or the like can be installed and executed. For example, user terminals may include AI speakers, smartphones, mobile phones, navigation, computers, laptops, digital broadcasting terminals, personal digital assistants (PDAs), portable multimedia players (PMPs), tablet PCs, game consoles, wearable devices, IoT (Internet Of Things) devices, VR (virtual reality) devices, AR (augmented reality) devices, set-top boxes, and the like. In addition, in FIG. 2, three user terminals (210_1, 210_2, and 210_3) are illustrated as communicating with the information processing system 230 through the network 220, but the present disclosure is not limited to this, and a different number of user terminals may be communicably connected to the information processing system 230 through the network 220.

In FIG. 2, a configuration in which the user terminals 210_1, 210_2, and 210_3 receive a composite image by communicating with the information processing system 230 is illustrated as an example, but the present disclosure is not limited thereto, and the user's request or input may be provided to the information processing system 230 through an input device associated with the information processing system 230 without going through the user terminals (210_1, 210_2, and 210_3), and the result of processing the user's request or input may be provided to the user through an output device (for example, a display or the like) associated with the information processing system 230.

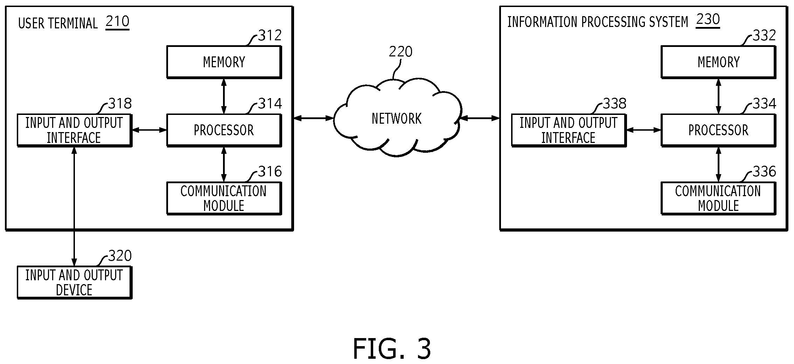

FIG. 3 is a block diagram illustrating the internal configuration of the user terminal 210 and the information processing system 230 according to an embodiment of the present disclosure. The user terminal 210 may refer to any computing device capable of executing applications, web browsers, and the like and capable of performing wired/wireless communication, for example, and may include the mobile phone terminal 210_1, the tablet terminal 210_2, and the PC terminal (210_3) of FIG. 2, for example. As illustrated in the figure, the user terminal 210 may include a memory 312, a processor 314, a communication module 316, and an input/output interface 318. Similarly, the information processing system 230 may include a memory 332, a processor 334, a communication module 336, and an input/output interface 338. As illustrated in FIG. 3, the user terminal 210 and the information processing system 230 may be configured to communicate information and/or data through the network 220 using respective communication modules 316 and 336. Additionally, the input/output device 320 may be configured to input information and/or data to the user terminal 210 through the input/output interface 318 or to output information and/or data generated from the user terminal 210.

The memories 312 and 332 may include any non-transitory computer-readable recording medium. According to one embodiment, the memories 312 and 332 may include permanent mass storage devices such as read-only memory (ROM), disk drive, solid state drive (SSD), flash memory, and the like. As another example, permanent mass storage devices such as ROM, SSD, flash memory, disk drive, and the like may be included in the user terminal 210 or the information processing system 230 as a separate permanent storage device that is distinct from the memory. Additionally, an operating system and at least one program code may be stored in the memories 312 and 332.

These software components may be loaded from a computer-readable recording medium separate from the memories 312 and 332. Such a separate computer-readable recording medium may include a recording medium directly connectable to the user terminal 210 and the information processing system 230, and may include a computer-readable recording medium such as a floppy drive, a disk, a tape, a DVD/CD-ROM drive, or a memory card, for example. As another example, software components may be loaded into the memories 312 and 332 through the communication modules 316 and 336 rather than the computer-readable recording medium. For example, at least one program may be loaded into the memories 312 and 332 based on a computer program installed by files provided through the network 220 by a developer or a file distribution system that distributes application installation files.

The processors 314 and 334 may be configured to process instructions of a computer program by performing basic arithmetic, logic, and input/output operations. The instructions may be provided to the processors 314 and 334 by the memories 312 and 332 or the communication modules 316 and 336. For example, the processors 314 and 334 may be configured to execute the received instructions according to program codes stored in a recording device such as the memories 312 and 332.

The communication modules 316 and 336 may provide components or functions for the user terminal 210 and the information processing system 230 to communicate with each other through the network 220, and may provide components or functions for the user terminal 210 and/or the information processing system 230 to communicate with another user terminal or another system (for example, a separate cloud system or the like). For example, a request or data (for example, a composite image generation request or the like) generated by the processor 314 of the user terminal 210 according to a program code stored in a recording device such as the memory 312 may be transmitted to the information processing system 230 through the network 220 under the control of the communication module 316. Conversely, a control signal or command provided under the control of the processor 334 of the information processing system 230 may be received by the user terminal 210 through the communication module 316 of the user terminal 210 via the communication module 336 and the network 220.

The input/output interface 318 may be a means for interfacing with the input/output device 320. As an example, input devices may include devices such as cameras including audio sensors and/or image sensors, keyboards, microphones, and mice, and output devices may include devices such as displays, speakers, or haptic feedback devices. As another example, the input/output interface 318 may be a means for interfacing with a device such as a touch screen in which components or functions for performing input and output are integrated. For example, when the processor 314 of the user terminal 210 instructions of a computer program loaded into the memory 312, a service screen or the like configured using information and/or data provided by the information processing system 230 or another user terminal may be displayed on a display through the input/output interface 318. In FIG. 3, the input/output device 320 is illustrated not to be included in the user terminal 210, but the present disclosure is not limited to this and the input/output device 320 and the user terminal 210 may be configured as a single device. Additionally, the input/output interface 338 of the information processing system 230 may be a means for interfacing with an input/output device (not illustrated) that may be connected to the information processing system 230 or may be included in the information processing system 230. In FIG. 3, the input/output interfaces 318 and 338 are illustrated as elements configured separately from the processors 314 and 334, respectively, but the present disclosure is not limited thereto, and the input/output interfaces 318 and 338 may be configured to be included in the processors 314 and 334, respectively.

The user terminal 210 and information processing system 230 may include more components than those illustrated in FIG. 3. However, most of the related-art components may not necessarily require exact illustration. In one embodiment, the user terminal 210 may be implemented to include at least some of the input/output device 320 described above. Additionally, the user terminal 210 may further include other components such as a transceiver, a global positioning system (GPS) module, a camera, various sensors, and a database.

While a program for a composite image generation application or the like is running, the processor 314 may receive text, images, videos, voices, and/or motions input or selected through an input device such as a touch screen, a keyboard, a camera including an audio sensor and/or an image sensor, a microphone, or the like connected to the input/output interface 318 and may store the received text, images, videos, voices, and/or motions in the memory 312 or provide the same to the information processing system 230 through the communication module 316 and the network 220.

The processor 314 of the user terminal 210 may be configured to manage, process, and/or store the information and/or data received from the input/output device 320, other user terminals, the information processing system 230, and/or a plurality of external systems. The information and/or data processed by the processor 314 may be provided to the information processing system 230 through the communication module 316 and the network 220. The processor 314 of the user terminal 210 may transmit and output the information and/or data to the input/output device 320 through the input/output interface 318. For example, the processor 314 may output or display the received information and/or data on the screen of the user terminal 210.

The processor 334 of the information processing system 230 may be configured to manage, process, and/or store information and/or data received from a plurality of user terminals 210 and/or a plurality of external systems. The information and/or data processed by the processor 334 may be provided to the user terminal 210 through the communication module 336 and the network 220.

FIG. 4 is a diagram illustrating an example of the composite image generation system 130 according to an embodiment of the present disclosure. As illustrated in FIG. 4, the composite image generation system 130 may receive a background image 110 and a foreground image 120 to generate a composite image 140. For this purpose, the composite image generation system 130 may include a first artificial neural network 410, an encoder 420, and a second artificial neural network 430.

According to one embodiment, the composite image generation system 130 may generate information on the position and size within the background image 110 from the background image 110 and the foreground image 120 using the first artificial neural network 410. The first artificial neural network 410 may generate information on the position and size of an object of the same type as the object in the foreground image 120 to be present/placed in the background image 110 by taking the background, surrounding objects, and surrounding people included in the background image 110 into consideration. For example, the first artificial neural network 410 may generate information on the position of a person included in the foreground image 120 in a coordinate format and information on the size of the person in a scale format by taking the person included in the foreground image 120, the street background of the background image 110, and the person on the right into consideration. Through the above-described configuration, the composite image generation system 130 may generate the composite image 140 without user input regarding the position and size of the object of the same type as the object included in the foreground image 120 to be placed within the background image 110. In addition, the composite image generation system 130 may generate the composite image 140 in an optimal position and size without the user directly entering or specifying the position, size, or the like within the background image 110 through masking or the like and improve the efficiency of image synthesis task and the user convenience.

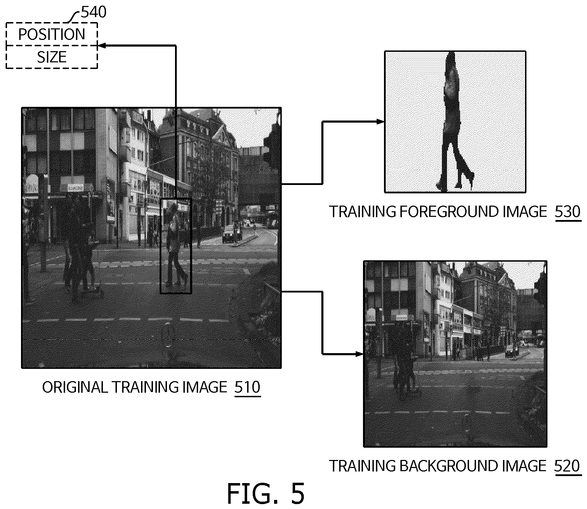

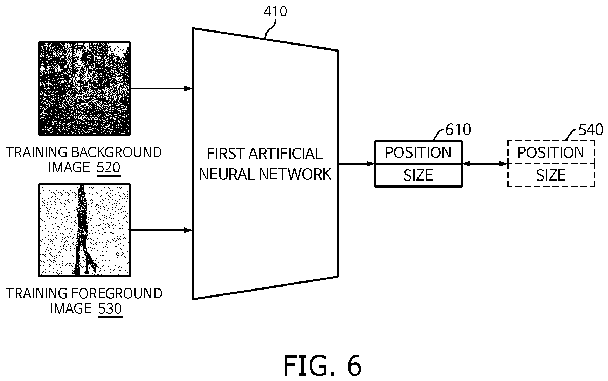

According to one embodiment, training data for generating the first artificial neural network 410 may include a pair of a training foreground image and a training background image. Here, the first artificial neural network 410 may be a model trained to estimate information on the position and size of the training foreground image to be placed within the training background image. In this case, the training foreground image and the training background image may be generated based on the same original training image. Details thereof will be described later with reference to FIGS. 5 and 6.

According to one embodiment, the composite image generation system 130 may use the encoder 420 and the second artificial neural network 430 to generate the composite image 140. For example, the composite image generation system 130 may extract a feature vector from the foreground image 120 using the encoder 420, and generate, using the second artificial neural network 430, the composite image 140 from the background image 110, the information on the position and size within the background image 110 generated using the first artificial neural network 410, and the feature vector extracted using the encoder 420. Here, the information on the position and size within the background image 110 and the feature vector may be input to an encoder and a decoder (or each layer of the encoder and decoder) of the second artificial neural network 430 as conditions for generating the composite image 140. In addition, the second artificial neural network 430 may be a generative model trained to generate the composite image 140 synthesized so that an object of the same type as the object included in the foreground image 120 is located at the corresponding position and size within the background image 110 by reflecting the information on the position and size within the background image 110. Through the above-described configuration, a natural and realistic composite image 140 can be generated by recognizing the features and patterns of the background image 110 and the foreground image 120, which are to be synthesized.

In one embodiment, the object included in the foreground image 120 and the object included in the composite image 140 may be the same type of object, but at least one of the appearance and pose of the objects may be different to generate a natural composite image 140. Likewise, for the generation of a natural composite image 140, the composite image 140 may be synthesized so that an object of the same type as the object included in the foreground image 120 is synthesized to match at least some of the brightness, saturation, hue, and luminance of the background image 110.

In FIG. 4, the components of the composite image generation system 130 show functional elements that are functionally distinct from each other, and a plurality of components may be implemented in an integrated form in an actual physical environment. Alternatively, the components of the composite image generation system 130 may be implemented separately from each other in an actual physical environment.

In addition, in FIG. 4, the internal configuration of the composite image generation system 130 is implemented by being divided into the first artificial neural network 410, the encoder 420, and the second artificial neural network 430, but the present disclosure is not limited to this and some configurations are omitted, other components may be added, or some components may be merged.

FIG. 5 is a diagram illustrating an example of generating a training foreground image 530, a training background image 520, and ground truth 540 from an original training image 510 according to an embodiment of the present disclosure. The original training image 510 may be an image for generating training data (for example, a pair of the training foreground image 530 and the training background image 520) and the ground truth 540 of the first artificial neural network of the composite image generation system. That is, the training background image 520 and the training foreground image 530 may be generated based on the same original training image 510.

According to one embodiment, the training foreground image 530 may be generated by extracting an area containing a specific object from the original training image 510. For example, as illustrated in FIG. 5, the training foreground image 530 may be generated by extracting a box area, which is an area containing a person present in the original training image 510.

According to one embodiment, the training background image 520 may be generated by removing a specific object of the training foreground image 530 from the original training image 510. For example, as illustrated in FIG. 5, the training background image 520 may be generated by removing a person present in the original training image 510. For example, a training background image may be generated through the process of removing the foreground from the position where the foreground was and filling the area with the background by inpainting or the like. In this case, the part in the original training image 510 from which a specific object is removed can be naturally corrected by taking the context of the surrounding background into consideration.

According to one embodiment, the ground truth 540 may be information on the position and size of a specific object in the original training image 510. For example, the ground truth 540 may be generated by measuring the position and size of the person in the original training image 510. In this case, information on the position of a specific object may be generated in a coordinate format (for example, Cartesian coordinates or the like). Additionally, information on the size of a specific object may be generated in a continuous scale format in a specific range (for example, 1 to 10 steps or the like).

In order to generate training data for training the first artificial neural network, the above-mentioned procedure may be repeatedly performed on a plurality of original training images.

FIG. 6 is a diagram illustrating an example of training the first artificial neural network 410 according to an embodiment of the present disclosure. According to one embodiment, the first artificial neural network 410 may receive the training background image 520 and the training foreground image 530 and estimate information 610 on the position and size of the training foreground image 530 to be placed within the training background image 520. As described above in FIG. 5, the training background image 520 and the training foreground image 530 may be generated based on the same original training image, and the training foreground image 530 may be generated by extracting an area containing a specific object (for example, a person, an object, or the like) from the original training image. Additionally, the training background image 520 may be generated by removing a specific object from the original training image. In FIG. 6, a single pair of the training background image 520 and the training foreground image 530 is illustrated, but the first artificial neural network 410 may be trained/generated using a plurality of training image pairs.

According to one embodiment, the first artificial neural network 410 may be trained by comparing the information 610 on the estimated position and size with the ground truth 540. For example, the first artificial neural network may be trained to minimize the loss calculated by comparing the information 610 on the position and size of the training foreground image 530 estimated through the first artificial neural network 410 with the ground truth 540. In this process, loss functions such as mean squared error (MSE) and cross-entropy loss may be used.

As in the above-described configuration, the first artificial neural network 410 may be trained to estimate information on the position and size of the foreground image to be placed within the background image based on training data including a plurality of training image pairs. Accordingly, the first artificial neural network 410 can be trained to estimate the optimal position and size of the object included in the foreground image within the background image.

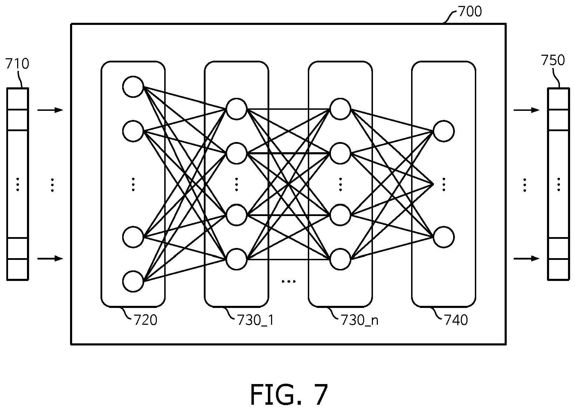

FIG. 7 is a diagram illustrating an example of an artificial neural network model 700 according to an embodiment of the present disclosure. The artificial neural network model 700 is an example of a machine learning model, and is a statistical learning algorithm implemented based on the structure of a biological neural network or a structure that executes the algorithm in machine learning technology and cognitive science.

According to one embodiment, the artificial neural network model 700 may represent a machine learning model with problem-solving capabilities, the model being trained so that nodes which are artificial neurons that form a network by combining synapses as in a biological neural network repeatedly adjust the weights of synapses to reduce the error between the correct output corresponding to a specific input and the inferred output. For example, the artificial neural network model 700 may include any probability model, a neural network model, and the like used in artificial intelligence learning methods such as machine learning and deep learning.

The artificial neural network model 700 is implemented as a multilayer perceptron (MLP) made up of multiple layers of nodes and connections between them. The artificial neural network model 700 according to this embodiment may be implemented using one of various artificial neural network model structures including MLP. As illustrated in FIG. 7, the artificial neural network model 700 includes an input layer 720 that receives an input signal or data 710 from the outside, an output layer 740 that outputs an output signal or data 750 corresponding to input data, and n hidden layers 730_1 to 730_n (where n is a positive integer) that are located between the input layer 720 and the output layer 740 to receive signals from the input layer 720, extract the features, and transmit them to the output layer 740. Here, the output layer 740 receives signals from the hidden layers 730_1 to 730_n and outputs them to the outside.

The learning method of the artificial neural network model 700 includes a supervised learning method that learns to optimize problem-solving by inputting a teacher signal (correct answer) and an unsupervised learning method that does not require a teacher signal. According to one embodiment, a computing device (for example, an information processing system or the like) may train the artificial neural network model 700 to cause the first artificial neural network to generate information on the position and size within the background image using training data including a training background image and a training foreground image. In addition, the computing device may train the artificial neural network model 700 to cause the second artificial neural network to generate a composite image using the feature vector extracted from the training foreground image, information on the position and size within the training background image, and the training data including the training background image.

According to one embodiment, the input variable of the artificial neural network model 700 in the first artificial neural network may include a background image and a foreground image. In this way, when the above-described input variables are input through the input layer 720, the output variable output from the output layer 740 of the artificial neural network model 700 may be information on the position and size within the background image.

According to one embodiment, the input variable of the artificial neural network model 700 in the second artificial neural network may include a background image, information on the position and size within the background image, and a feature vector. Additionally, the output variable output from the output layer 740 of the artificial neural network model 700 may be a composite image.

In this way, the artificial neural network model 700 can be trained so that matching is achieved between a plurality of input variables and a plurality of corresponding output variables of the input layer 720 and the output layer 740 of the artificial neural network model 700, respectively, and the synapse values between nodes included in the input layer 720, the hidden layers 730_1 to 730_n, and the output layer 740 are adjusted, whereby the correct output corresponding to a specific input can be extracted. Through this learning process, the features hidden in the input variables of the artificial neural network model 700 can be identified, and the synapse values (or weights) between the nodes of the artificial neural network model 700 can be adjusted to reduce the error between the output variable calculated based on the input variable and the target output.

In one embodiment, the computing device may train the first artificial neural network to minimize the loss between the information on the position and size of a specific object in the original training image, which is ground truth, and the information on the position and size of the training foreground image to be placed within the training background image output from the first artificial neural network. Here, the information on the position and size of a specific object in the original training image, which is the ground truth, may be extracted from the original training image.

In another embodiment, the computing device may train the second artificial neural network to minimize the loss between the original training image, which is the ground truth, and the composite image output from the second artificial neural network.

Using the artificial neural network model 700 trained in this way, the information on the position and size within the background image may be automatically generated from the first artificial neural network. Additionally, using the trained artificial neural network model 700, a composite image may be generated and provided from the second artificial neural network.

According to one embodiment, the first artificial neural network and/or the second artificial neural network may be generated by learning the first artificial neural network and/or the second artificial neural network for one user. In another embodiment, the first artificial neural network and/or the second artificial neural network may be generated by learning the first artificial neural network and/or the second artificial neural network for one user group including a plurality of users with the same or similar attributes. In another embodiment, the first artificial neural network and/or the second artificial neural network may be generated by learning the first artificial neural network and/or the second artificial neural network for all users.

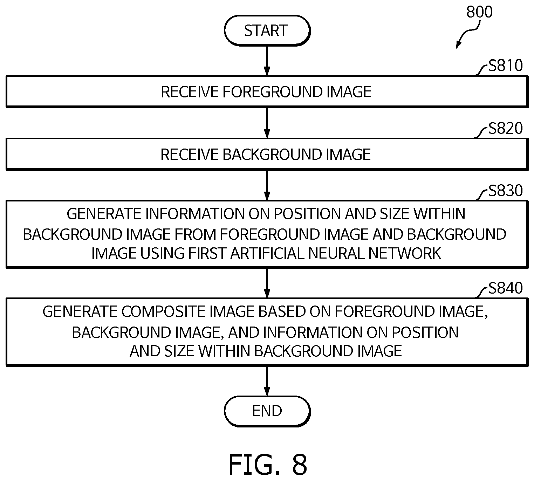

FIG. 8 is a flowchart illustrating an example of a method 800 for generating a composite image according to an embodiment of the present disclosure. In one embodiment, the method 800 may be performed by at least one processor (for example, the processor 334 of the information processing system 230 or the like). The method 800 may start by receiving a foreground image (S810). Then, the processor may receive the background image (S820).

Then, the processor may generate information on the position and size within the background image from the foreground image and the background image using the first artificial neural network (S830). In one embodiment, the first artificial neural network may be a model trained to estimate information on the position and size of a training foreground image to be placed within a training background image based on training data including a pair of the training foreground image and the training background image. The training foreground image and the training background image may be generated based on the same original training image. Additionally, the training foreground image may be generated by extracting an area containing a specific object from the original training image, the training background image may be generated by removing a specific object from the original training image, and the information on the position and size of the specific object within the original training image may be used as ground truth for the pair of the training foreground image and the training background image when learning the first artificial neural network.

Finally, the processor may generate a composite image based on the foreground image, the background image, and information on the position and size within the background image (S840). In one embodiment, the processor may extract a feature vector from the foreground image and generate a composite image from the background image, the information on the position and size within the background image, and the feature vector using the second artificial neural network. Additionally, the information on the position and size within the background image and feature vector may be input to the second artificial neural network as conditions for generating a composite image. The second artificial neural network may be a generative model trained to generate a composite image in which an object of the same type as the object included in the foreground image is synthesized at the position and size within the background image.

In one embodiment, the object included in the foreground image and the object included in the composite image of the same type as the object included in the foreground image may differ from each other in at least one of their appearance and pose. Additionally, the composite image may be an image in which an object of the same type as the object included in the foreground image is synthesized to match at least some of the brightness, saturation, hue, and luminance of the background image. A composite image may be generated without user input regarding the position and size of an object of the same type as an object included in the foreground image to be placed within the background image.

The flowchart illustrated in FIG. 8 and the description described above are merely examples and aspects are not limited thereto and may be implemented in various ways. For example, one or more steps may be omitted, the order of each step may be changed, and at least some steps may be performed repeatedly or may be performed overlappingly.

The method described above may be provided as a computer program stored in a computer-readable recording medium for execution on a computer. The medium may be a type of medium that continuously stores a program executable by a computer, or temporarily stores the program for execution or download. In addition, the medium may be a variety of writing means or storage means having a single piece of hardware or a combination of several pieces of hardware, and is not limited to a medium that is directly connected to any computer system, and accordingly, may be present on a network in a distributed manner. An example of the medium includes a medium configured to store program instructions, including a magnetic medium such as a hard disk, a floppy disk, and a magnetic tape, an optical medium such as a CD-ROM and a DVD, a magnetic-optical medium such as a floptical disk, and a ROM, a RAM, a flash memory, and the like. In addition, other examples of the medium may include an app store that distributes applications, a site that supplies or distributes various pieces of software, and a recording medium or a storage medium managed by a server.

The methods, operations, or techniques of the present disclosure may be implemented by various means. For example, these techniques may be implemented in hardware, firmware, software, or a combination thereof. Those skilled in the art will further appreciate that various illustrative logical blocks, modules, circuits, and algorithm steps described in connection with the disclosure herein may be implemented in electronic hardware, computer software, or combinations of both. To clearly illustrate this interchangeability of hardware and software, various illustrative components, blocks, modules, circuits, and steps have been described above generally in terms of their functionality. Whether such a function is implemented as hardware or software varies according to design requirements imposed on the particular application and the overall system. Those skilled in the art may implement the described functions in varying ways for each particular application, but such implementation should not be interpreted as causing a departure from the scope of the present disclosure.

In a hardware implementation, processing units used to perform the techniques may be implemented in one or more ASICs, DSPs, digital signal processing devices (DSPDs), programmable logic devices (PLDs), field programmable gate arrays (FPGAs), processors, controllers, microcontrollers, microprocessors, electronic devices, other electronic units designed to perform the functions described in the present disclosure, computer, or a combination thereof.

Accordingly, various example logic blocks, modules, and circuits described in connection with the present disclosure may be implemented or performed with general purpose processors, DSPs, ASICs, FPGAs or other programmable logic devices, discrete gate or transistor logic, discrete hardware components, or any combination of those designed to perform the functions described herein. The general purpose processor may be a microprocessor, but in the alternative, the processor may be any related processor, controller, microcontroller, or state machine. The processor may also be implemented as a combination of computing devices, for example, a DSP and microprocessor, a plurality of microprocessors, one or more microprocessors associated with a DSP core, or any other combination of the configurations.

In the implementation using firmware and/or software, the techniques may be implemented with instructions stored on a computer-readable medium, such as random-access memory (RAM), read-only memory (ROM), non-volatile random-access memory (NVRAM), programmable read-only memory (PROM), erasable programmable read-only memory (EPROM), electrically erasable PROM (EEPROM), flash memory, compact disc (CD), magnetic or optical data storage devices, and the like. The instructions may be executable by one or more processors, and may cause the processor(s) to perform certain aspects of the functions described in the present disclosure.

Although the examples described above have been described as utilizing aspects of the currently disclosed subject matter in one or more standalone computer systems, aspects are not limited thereto, and may be implemented in conjunction with any computing environment, such as a network or distributed computing environment. Furthermore, the aspects of the subject matter in the present disclosure may be implemented in multiple processing chips or apparatus, and storage may be similarly influenced across a plurality of apparatus. Such apparatus may include PCs, network servers, and portable apparatus.

Although the present disclosure has been described in connection with some examples herein, various modifications and changes can be made without departing from the scope of the present disclosure, which can be understood by those skilled in the art to which the present disclosure pertains. In addition, such modifications and changes should be considered within the scope of the claims appended herein.

## Claims

1. A method, for generating a composite image, executed by one or more processors, the method comprising:
receiving a foreground image;
receiving a background image;
generating, using a first artificial neural network, information on a position and size within the background image, wherein the information on the position and size within the background image is generated from the foreground image and the background image; and
generating a composite image based on:
the foreground image,
the background image, and
the information on the position and size within the background image.

2. The method according to claim 1, wherein
the generating of the composite image includes:
extracting a feature vector from the foreground image; and
generating, using a second artificial neural network, the composite image from the background image, the information on the position and size within the background image, and the feature vector.

3. The method according to claim 2, wherein
the information on the position and size within the background image, and the feature vector are input to the second artificial neural network as conditions for generating the composite image.

4. The method according to claim 2, wherein
the second artificial neural network is a generative model trained to generate the composite image in which an object of a same type as an object included in the foreground image is synthesized at the position and size within the background image.

5. The method according to claim 4, wherein
the object included in the foreground image and the object of the same type included in the composite image are different from each other in at least one of appearance and pose.

6. The method according to claim 2, wherein
the composite image is an image in which an object of a same type as an object included in the foreground image is synthesized to match at least some of brightness, saturation, hue, and luminance of the background image.

7. The method according to claim 1, wherein
the first artificial neural network is a model trained to estimate information on a position and size of a training foreground image to be placed within a training background image based on training data including a pair of the training foreground image and the training background image, and
the training foreground image and the training background image are generated based on a same original training image.

8. The method according to claim 7, wherein
the training foreground image is generated by extracting an area containing a specific object from the same original training image,
the training background image is generated by removing the specific object from the same original training image, and
information on a position and size of the specific object within the same original training image is used as ground truth for the pair of the training foreground image and the training background image when learning the first artificial neural network.

9. The method according to claim 1, wherein
the composite image is generated without user input regarding a position and size of an object of a same type as an object included in the foreground image to be placed within the background image.

10. A non-transitory computer-readable recording medium storing instructions for causing performance of the method according to claim 1.

11. An information processing system, comprising:
a communication device;
a memory; and
one or more processors coupled to the memory and configured to execute one or more computer-readable programs included in the memory, wherein
the one or more computer-readable programs store instructions that, when executed by the one or more processors, cause the information processing system to:
receive a foreground image;
receive a background image;
generate, using a first artificial neural network, information on a position and size within the background image, wherein the information on the position and size within the background image is generated from the foreground image and the background image; and
generate a composite image based on:
the foreground image,
the background image, and
the information on the position and size within the background image.
